# EUROPEAN PATENT APPLICATION

(11) **EP 4 456 163 A1**
(43) Date of publication of application: **30.10.2024**
(21) Application number: 22910537.4
(22) Date of filing: 17.10.2022
(51) Int. Cl.: H01M 4/13, H01M 4/139, H01M 4/62

(54) **ELECTRODE, NON-AQUEOUS ELECTROLYTE SECONDARY BATTERY, AND ELECTRODE MANUFACTURING METHOD**

(30) Priority: 23.12.2021 JP 2021209138
(71) Applicant: Panasonic Intellectual Property Management Co., Ltd., Osaka-shi, Osaka 540-6207 (JP)
(72) Inventor: KATOU Daisuke, Osaka 571-0057 (JP); IZUMI Reiko, Osaka 571-0057 (JP)
(74) Representative: Eisenführ Speiser
(86) International application number: PCT/JP2022/038596
(87) International publication number: WO 2023/119814

(57) **Abstract**

An electrode (10) according to one embodiment of the present invention comprises a core member (11) and a mixture sheet (12) joined to the surface of the core member (11). The mixture sheet (12) includes an active material (21) and a fibrous binder (22) having been fibrillated. The crystalline size of the binder (22), which is obtained by X-ray diffraction measurement, is 20-32 nm.

## Description

### TECHNICAL FIELD

The present disclosure relates to an electrode, a non-aqueous electrolyte secondary battery comprising the electrode, and a method for manufacturing an electrode.

### BACKGROUND ART

An electrode of a non-aqueous electrolyte secondary battery such as a lithium-ion battery is typically produced by a wet method including applying an electrode mixture slurry including an active material, a binder, and others to a surface of a metal foil as a core, and then drying and compressing the coating film. In this case, a problem is that migration, which is travelling of the binder during drying of the coating film, easily occurs. The migration of the binder increases the amount of the binder on the surface side compared with the core side of the coating film (electrode mixture layer), leading to uneven distribution of the binder in a thickness direction of the electrode mixture layer.

A dry method has been investigated in recent years including stretching and forming an electrode mixture into a sheet to produce a mixture sheet and bonding the sheet onto a core to manufacture an electrode. Patent Literature 1 discloses an electrode mixture sheet produced by mixing an active material, a fibrillable binder such as polytetrafluoroethylene (PTFE), and a conductive agent using a mill, and then applying a large shearing force to this mixture at a high pressure for a treatment for a long time to fibrillate PTFE.

### CITATION LIST

### PATENT LITERATURE

PATENT LITERATURE 1: National Publication of International Patent Application No. 2019-512872

### SUMMARY

If the fibrillation of the binder is insufficient in the above dry method, strength of the mixture sheet decreases, and the mixture may fail to be formed into the sheet. Meanwhile, a case where the binder is excessively fibrillated causes difficulty in production of the mixture sheet having sufficient strength, and the mixture may similarly fail to be formed into the sheet. Physical properties of the mixture sheet significantly vary depending on a state of the fibrillated fibrous binder, and it has conventionally not been unveiled what state of the fibrous binder is specifically required for achieving the mixture sheet of good quality.

It is an advantage of the present disclosure to provide an electrode comprising a mixture sheet with high strength, and a method for manufacturing the electrode.

An electrode according to the present disclosure is an electrode comprising: a core; and a mixture sheet bonded onto a surface of the core, wherein the mixture sheet includes an active material and a fibrillated fibrous binder, and the binder has a crystallite size of greater than or equal to 20 nm and less than or equal to 32 nm as determined by X-ray diffractometry.

A non-aqueous electrolyte secondary battery according to the present disclosure comprises the above electrode. The constitution of the above electrode is preferably applied for a positive electrode.

A method for manufacturing an electrode according to the present disclosure includes: a first step of mixing an active material and a binder to produce an electrode mixture having a solids content of substantially 100%; a second step of forming and rolling the electrode mixture into a sheet to produce a mixture sheet; and a third step of bonding the mixture sheet onto a surface of a core, wherein, in at least the first step, the binder is fibrillated so that a reduction rate of a crystallite size of the binder is greater than or equal to 4% and less than or equal to 40% as determined by X-ray diffractometry.

According to an aspect of the present disclosure, an electrode comprising a mixture sheet with high strength may be provided. The mixture layer of the electrode according to the present disclosure is, for example, a mixture sheet with a smooth surface and high tensile strength, and the non-aqueous electrolyte secondary battery including the electrode according to the present disclosure has excellent cycle characteristics.

### BRIEF DESCRIPTION OF DRAWINGS

FIG. 1 is a sectional view of an electrode of an example of an embodiment.
FIG. 2 is a view illustrating an electrode mixture of an example of an embodiment.
FIG. 3 is a view illustrating the step of producing an electrode mixture in a manufacturing process of an electrode of an example of an embodiment.
FIG. 4 is a view illustrating the step of producing a mixture sheet and the step of bonding the mixture sheet onto a core in a manufacturing process of an electrode of an example of an embodiment.

### DESCRIPTION OF EMBODIMENTS

As noted above, for obtaining a mixture sheet (mixture layer) of good quality, it is important that the fibrous binder is regulated to have an appropriate state in the electrode produced by the dry method. The present inventors have made intensive investigation with focusing on a crystallite size of the fibrous binder, and consequently found that a dense mixture sheet with high strength is obtained in a case where a crystallite size of the fibrous binder determined by X-ray diffractometry is greater than or equal to 20 nm and less than or equal to 32 nm.

As a result of the investigation by the present inventors, it has been found that there is a proper range of the crystallite size of the fibrous binder, and that the strength of the mixture sheet is considerably deteriorated if the crystallite size is out of the range. In other words, the crystallite size of the fibrous binder regulated within the proper range yields a dense mixture sheet with high strength. In addition, regulating a change rate of the crystallite size of the binder before and after the fibrillation within a predetermined range yields a mixture sheet of good quality. Regulating the change rate of the crystallite size within the predetermined range and regulating the crystallite size to be greater than or equal to 20 nm and less than or equal to 32 nm yield a mixture sheet of better quality.

Hereinafter, embodiments of an electrode and a method for manufacturing an electrode according to the present disclosure will be described in detail. Embodiments described below are merely examples, and the present disclosure is not limited to the following embodiments. Drawings referred to in the description of embodiments are schematically illustrated, and a size ratio and the like of constituents illustrated in Drawings should be determined with considering the following description. Constitutions composed by selectively combining a plurality of embodiments and modified examples described hereinafter are included in the present disclosure.

Although the electrode according to the present disclosure is suitable for a non-aqueous electrolyte secondary battery such as a lithium-ion battery, it may be applied for a battery including an aqueous electrolyte or a power storage device such as a capacitor. Hereinafter, an electrode for a non-aqueous electrolyte secondary battery will be exemplified to make a description. The constitution and manufacturing method of the electrode for a non-aqueous electrolyte secondary battery according to the present disclosure may be applied for a negative electrode, but is particularly preferably applied for a positive electrode.

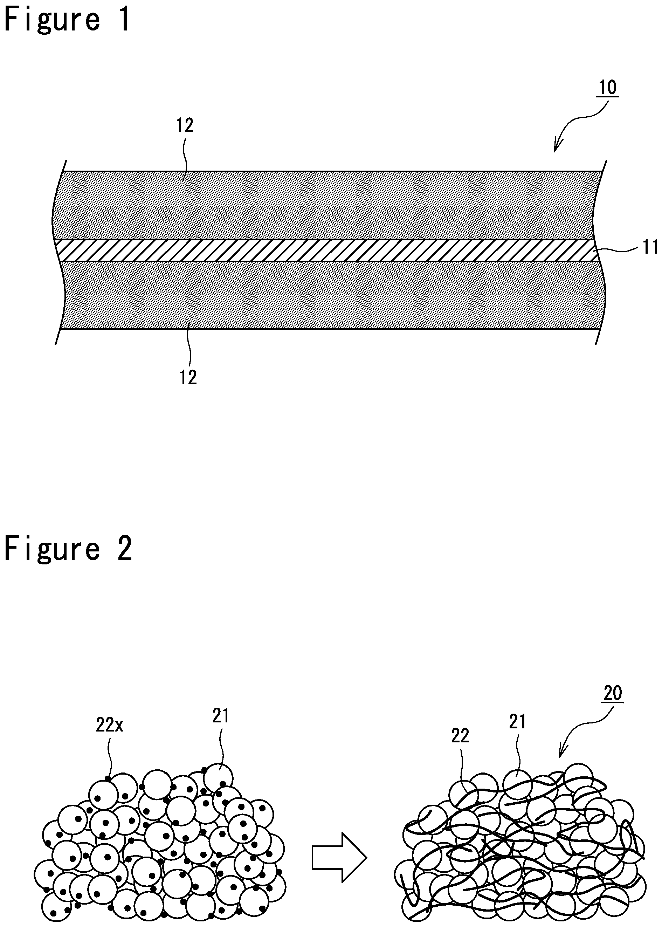

FIG. 1 is a sectional view of an electrode 10 of an example of an embodiment. As illustrated in FIG. 1, the electrode 10 comprises a core 11 and a mixture sheet 12 bonded onto a surface of the core 11. The mixture sheet 12 is preferably bonded onto both surfaces of the core 11. The mixture sheet 12 is produced by forming an electrode mixture 20 (see FIG. 2), which will be described later, into a sheet, and bonded onto the core 11 to serve as an electrode mixture layer. The electrode 10 may be an elongated electrode for forming a wound electrode assembly, or may be a rectangular electrode for forming a stacked electrode assembly.

For the core 11, a metal foil, a film having a metal layer formed on a surface thereof, or the like may be used. A thickness of the core 11 is, for example, greater than or equal to 5 µm and less than or equal to 20 µm. When the electrode 10 is the positive electrode, a metal foil including aluminum as a main component may be used for the core 11. In a case of the negative electrode, a metal foil including copper as a main component may be used. The main component herein means a component in the highest mass proportion. The core 11 may be an aluminum foil made of substantially 100% aluminum, or may be a copper foil made of substantially 100% copper.

The mixture sheet 12 includes an active material 21 and a binder 22. The mixture sheet 12 is produced by forming the electrode mixture 20 including the active material 21 and the binder 22 into a sheet. Although a detail will be described later, the binder 22 is a fibrillated fibrous binder, and is preferably polytetrafluoroethylene having a crystallite size of greater than or equal to 20 nm and less than or equal to 32 nm as determined by X-ray diffractometry (XRD). The thickness of the mixture sheet 12 is, for example, greater than or equal to 30 µm and less than or equal to 120 µm, and preferably greater than or equal to 50 µm and less than or equal to 100 µm.

The mixture sheet 12 may further include a conductive agent. In particular, when serving as a positive electrode mixture layer, the mixture sheet 12 preferably includes the conductive agent. Examples of the conductive agent included in the mixture sheet 12 include carbon materials such as carbon black (CB), acetylene black (AB), Ketjenblack, carbon nanotube (CNT), and graphite. When the electrode 10 is the positive electrode, a preferable example of the content of the conductive agent in the mixture sheet 12 is greater than or equal to 0.2 mass% and less than or equal to 5.0 mass%.

For the active material of the positive electrode, a lithium-transition metal composite oxide is typically used. Examples of a metal element contained in the lithium-transition metal composite oxide include Ni, Co, Mn, Al, B, Mg, Ti, V, Cr, Fe, Cu, Zn, Ga, Sr, Zr, Nb, In, Sn, Ta, and W. Among them, at least one selected from Ni, Co, and Mn is preferably contained. The content of the positive electrode active material is preferably greater than or equal to 85 mass% and less than or equal to 99 mass%, and more preferably greater than or equal to 90 mass% and less than or equal to 99 mass% relative to a mass of the mixture sheet 12 (the preferable content of the positive electrode active material also applies to a preferable content of a negative electrode active material).

The positive electrode active material is of secondary particles formed by aggregation of a plurality of primary particles. A median diameter (D50) on a volumetric basis of the positive electrode active material is preferably greater than or equal to 3 µm and less than or equal to 30 µm. The D50 means the particle diameter of the 50th percentile from the smaller particle diameter side in a particle size distribution on a volumetric basis. The particle size distribution of the positive electrode active material may be measured by using a laser diffraction-type particle size distribution analyzer (for example, MT3000II, manufactured by MicrotracBEL Corp.) with water as a dispersion medium.

For the active material of the negative electrode, carbon-based active materials are used, including: natural graphite such as flake graphite, massive graphite, and amorphous graphite; and an artificial graphite such as massive artificial graphite (MAG) and graphitized mesophase-carbon microbead (MCMB). As the negative electrode active material, an active material containing Si, Sn, or others that forms an alloy with lithium may be used.

When the mixture sheet 12 is divided into three equal parts in a thickness direction, the parts being designated as a first region, a second region, and a third region from a side of the core 11, the content of the binder 22 in the first region, (a), the content of the binder 22 in the second region, (b), and the content of the binder 22 in the third region, (c), preferably satisfy (c - a)/(a + b + c) ≤ ±10%, and more preferably satisfy (c - a)/(a + b + c) ≤ ±5%. In the electrode 10, the binder 22 is substantially uniformly present in an entirety of the mixture sheet 12 without uneven presence in part of the mixture sheet 12.

The density of the mixture sheet 12 is not particularly limited, but when the mixture sheet 12 serves as the positive electrode mixture layer, the density is preferably greater than or equal to 2.5 g/cc and less than or equal to 4.5 g/cc, more preferably greater than or equal to 3.0 g/cc and less than or equal to 4.2 g/cc, and particularly preferably greater than or equal to 3.0 g/cc and less than or equal to 4.0 g/cc. In the electrode 10, an intermediate layer interposed between the core 11 and the mixture sheet 12 may be provided. The intermediate layer, which include, for example, a conductive agent and a binder, improves binding strength of the mixture sheet 12 onto the core 11, and reduces interface resistance.

FIG. 2 is a view illustrating an example of the electrode mixture 20, and also illustrates a state of the binder 22 before fibrillated (binder 22x). As illustrated in FIG. 2, the electrode mixture 20 forming the mixture sheet 12 includes the active material 21 and the fibrillated fibrous binder 22. The electrode mixture 20 may further include the conductive agent. The electrode mixture 20 may be produced by, for example, fibrillating the binder 22x to form the fibrous binder 22 in a process of stirring and mixing the active material 21, the particle binder 22x, and the conductive agent (not illustrated). The fibrous binder 22 entwines particles of the active material 21 to bind the particles to each other, which enables the electrode mixture 20 to be formed into a single sheet.

The fibrous binder 22 is the binder fibrillated by applying a predetermined shearing force to the particle binder 22x, as noted above. The binder 22x may be any fibrillable material that adheres to the particle surfaces of the active material 21 and that has a reagent resistance against an electrolyte liquid, and a composition thereof is not particularly limited. A preferable example thereof is polytetrafluoroethylene (PTFE).

An average particle diameter of the PTFE particles is not particularly limited, but preferably greater than or equal to 100 µm and less than or equal to 500 µm, and more preferably greater than or equal to 200 µm and less than or equal to 400 µm. The average particle diameter of the PTFE particles may be determined by observing the PTFE particles with a scanning electron microscope (SEM). Specifically, outer shapes of randomly selected 100 particles are specified, and then a major diameter (longest diameter) of each of the 100 particles is determined to obtain an average value thereof as the average particle diameter.

The fibrous binder 22 preferably has a crystallite size of greater than or equal to 20 nm and less than or equal to 32 nm. The crystallite size of the binder 22 is determined by X-ray diffractometry. A detail of the X-ray diffractometry will be described later (see Examples). When the crystallite size of the binder 22 determined by the X-ray diffractometry is within the above range, the effect of modifying the mixture sheet 12 is more remarkable to obtain a sheet with a smooth surface and high strength.

The crystallite size of the fibrous binder 22 is more preferably greater than or equal to 22 nm, further preferably greater than or equal to 25 nm, and particularly preferably greater than or equal to 28 nm. A case where the crystallite size is excessively small causes the fiber to be excessively thin to considerably deteriorate the strength of the mixture sheet 12, for example. An upper limit of the crystallite size of the binder 22 is more preferably 31 nm, further preferably 30 nm, and particularly preferably 29 nm. Regulating the crystallite size within the appropriate range yields the electrode 10 comprising the mixture sheet 12 of good quality as the mixture layer.

The content of the fibrous binder 22 is preferably greater than or equal to 0.4 parts by mass and less than or equal to 5.0 parts by mass, and more preferably greater than or equal to 0.6 parts by mass and less than or equal to 2.0 parts by mass per 100 parts by mass of the mass of the active material 21. When the content of the binder 22 is within the above range, the effect of modifying the mixture sheet 12 is more remarkable. The mixture sheet 12 may include, in addition to the fibrous binder 22, a particulate binding material that is not to be fibrillated, such as polyvinylidene fluoride (PVdF).

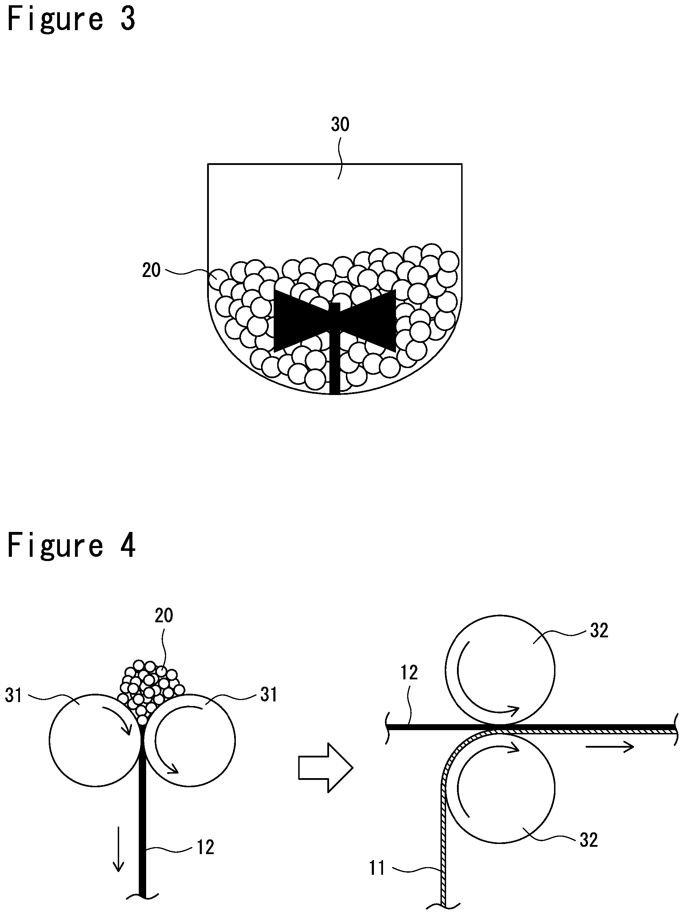

Hereinafter, a method for manufacturing the electrode 10 will be described with reference to FIG. 3 and FIG. 4. Although a method for manufacturing the positive electrode will be exemplified hereinafter, this manufacturing method may also be applied to manufacturing the negative electrode. FIG. 3 illustrates the step of mixing raw materials for a mixture to produce the electrode mixture 20. FIG. 4 illustrates the steps of rolling the electrode mixture 20 to produce the mixture sheet 12, and bonding the mixture sheet 12 onto the elongated core 11.

The electrode 10 is manufactured via the following steps:
(1) the first step of mixing the electrode mixture 20 and the binder to produce the electrode mixture 20 having a solids content of substantially 100% (see FIG. 3);
(2) the second step of forming and rolling the electrode mixture 20 into a sheet to produce the mixture sheet 12 (see FIG. 4 left); and
(3) the third step of bonding the mixture sheet 12 onto the surface of the core 11 (see FIG. 4 right).

In at least the first step, the binder is fibrillated so that a reduction rate of the crystallite size of the binder is greater than or equal to 4% and less than or equal to 40% as determined by X-ray diffractometry. In the first step, the particle binder 22x is preferably used as the binder. The binder is preferably fibrillated so that the crystallite size is greater than or equal to 20 nm and less than or equal to 32 nm.

As illustrated in FIG. 3, the mixture sheet 12 is manufactured by a dry process using the electrode mixture 20 having a solids content of substantially 100%. In the dry process, a solvent is not used in mixing the raw materials for a mixture to produce the electrode mixture 20 having a solids content of substantially 100%. The electrode mixture 20 is produced by, for example, stirring and mixing the active material 21, the particle binder 22x, and the conductive agent with a mixer 30. The particle binder 22x may be fibrillated at a certain degree before mixed with the other raw materials, namely before the above first step.

As the mixer 30, a conventionally known mechanical stirring mixer that may apply a mechanical shearing force may be used. Specific examples of the mixer 30 include a cutter mill (such as Wonder Crusher, manufactured by OSAKA CHEMICAL Co., Ltd.), a pin mill, a bead mill, a kneading machine (such as a kneader), a planetary mixer, and a fine-particle composer (an apparatus generating a shearing force between: a rotor having a special shape and rotating at a high speed in a tank; and a collision plate). In the first step, the raw materials for a mixture are mixed and the particle binder 22x is fibrillated to form the fibrous binder 22.

A treatment time of the first step (time for applying the shearing force to the raw materials for a mixture) is preferably within a few minutes, and for example, greater than or equal to 0.5 minutes and less than or equal to 10 minutes, which varies depending on the type of the mixer 30 and others. A too long treatment time increases the amount of the conductive agent to be incorporated into the binder 22, which may deteriorate conductivity of the mixture sheet 12. The first step may include: the substep of mixing the active material 21 and the conductive agent; and the substep of mixing the mixture of the active material 21 and the conductive agent and the binder. In this case, the amount of the conductive agent to be incorporated into the fibrous binder 22 may be reduced.

In the first step, the binder is preferably fibrillated so that a reduction rate of the crystallite size of the binder is greater than or equal to 4% and less than or equal to 40% as determined by the X-ray diffractometry. That is, the fibrillation is performed by applying the shearing force to the binder so that the crystallite size (D2) of the fibrous binder 22 reduces within a range of greater than or equal to 4% and less than or equal to 40% relative to a crystallite size (D 1) of the particle binder 22x. In other words, a ratio of the crystallite size before and after the fibrillation (D2/D1) is regulated to be greater than or equal to 60% and less than or equal to 96%.

When the reduction rate of the crystallite size before and after the fibrillation is greater than or equal to 4% and less than or equal to 40%, that is, the ratio of the crystallite size (D2/D1) is greater than or equal to 60% and less than or equal to 96%, the effect of modifying the mixture sheet 12 is more remarkable to yield the sheet with a smooth surface and high strength. For example, D2/D1 of less than 60% causes an excessively fibrillated state to considerably deteriorate the strength of the sheet. On the other hand, a state where D2/D1 exceeds 96% causes insufficient fibrillation to cause difficulty in formation of the sheet.

The ratio of the crystallite size of the binder before and after the fibrillation (D2/D1) is more preferably greater than or equal to 0.65 (reduction rate: 35%), further preferably greater than or equal to 0.70, and particularly preferably greater than or equal to 0.80. The upper limit of D2/D1 is more preferably 0.95 (reduction rate: 5%), further preferably 0.93, and particularly preferably 0.90. Regulating the change rate of the crystallite size before and after the fibrillation within an appropriate range yields the electrode 10 comprising the mixture sheet 12 of good quality as the mixture layer.

The crystallite size of the particle binder 22x is not particularly limited, and may be greater than or equal to 20 nm and less than or equal to 55 nm, for example. The fibrillation is preferably performed so that the crystallite size of the fibrous binder 22 is greater than or equal to 20 nm and less than or equal to 32 nm. In this case, the effect of modifying the mixture sheet 12 is more remarkable, and the sheet with a smooth surface and high strength is easily obtained. A preferable example of the crystallite size of the binder 22x is greater than or equal to 30 nm and less than or equal to 35 nm.

For dry-mixing the active material 21 and the conductive agent, a mechano-fusion method may be used. Applying the mechano-fusion method increases the bonding force of the conductive agent onto the particle surfaces of the active material 21. Examples of the mechano-fusion reactor include: Nobilta(R) or MECHANO FUSION(R), manufactured by HOSOKAWA MICRON CORPORATION; Hybridization System, manufactured by NARA MACHINERY CO., LTD.; BALANCE GRAN, manufactured by FREUND-TURBO CORPORATION; and COMPOSI, manufactured by NIPPON COKE & ENGINEERING CO., LTD.

As illustrated in FIG. 4, the electrode mixture 20 is formed and rolled into a sheet with two rollers 31 to yield the mixture sheet 12. The two rollers 31 are disposed with a predetermined gap, and rotate in the same direction. The electrode mixture 20 is supplied into the gap between the two rollers 31 to be compressed with the two rollers 31, and to be stretched into a sheet. The two rollers 31 have, for example, the same diameter. The mixture sheet 12 may be passed through the gap between the two rollers 31 a plurality of times.

The thickness of the mixture sheet 12 may be regulated with, for example, the gap between the two rollers 31, the peripheral speed, and the number of times of the stretching treatment. In the rolling step, the electrode mixture 20 may be formed into a sheet by using two rollers 31 having peripheral speeds differing by a factor of greater than or equal to two. Setting the different peripheral speeds of the two rollers 31 facilitates the thinning of the mixture sheet 12 to improve the productivity. The mixture sheet 12 may be further compressed to be dense. In this compressing step, a linear pressure of, for example, greater than or equal to 1 t/cm and less than or equal to 3 t/cm may be applied.

Then, the elongated mixture sheet 12 is bonded onto the surface of the elongated core 11, and the resultant is cut to a predetermined electrode size to obtain the electrode 10. Although FIG. 4 illustrates a state of the mixture sheet 12 bonded onto only one surface of the core 11, the mixture sheets 12 are bonded onto both surfaces of the core 11. The two mixture sheets 12 may be simultaneously bonded onto both the surfaces of the core 11. Alternatively, one mixture sheet 12 may be bonded onto one surface of the core 11, and then the other mixture sheet 12 may be bonded onto the other surface.

The mixture sheet 12 is laminated onto the surface of the core 11 by using two rollers 32. For example, a temperature of the two rollers 32 may be room temperature, or less than or equal to 300°C, preferably less than or equal to 200°C. The linear pressure applied by the two rollers 32 is smaller than the linear pressure applied in the compressing step, and may be, for example, is greater than or equal to 0.1 t/cm and less than or equal to 2 t/cm. On both the surfaces of the core 11 to be subjected to this laminating step, an intermediate layer may be formed.

### EXAMPLES

Hereinafter, the present disclosure will be further described by way of Examples, but the present disclosure is not limited to these Examples.

### <Example 1>

### [Production of Positive Electrode Mixture Sheet]

By using NOB300-Nobilta(R), manufactured by HOSOKAWA MICRON CORPORATION, 1000 g of a lithium-transition metal composite oxide being a positive electrode active material and 10 g of carbon black were mixed for 5 minutes to produce a carbon-coated positive electrode active material in which carbon black adhered to particle surfaces of the positive electrode active material. This carbon-coated positive electrode active material and PTFE particles having a crystallite size (D1) of 33.1 nm were fed into Wonder Crusher (WC), manufactured by OSAKA CHEMICAL Co., Ltd., in a mass ratio of 101:1, and the mixture was subjected to a mixing treatment at room temperature at the number of rotation of Scale 3 for 1 minute. The number of rotation of Wonder Crusher is maximum 28000 rpm at Scale 10.

The PTFE particles were fibrillated to form fibrous PTFE by the above-described mixing treatment, thereby obtaining a positive electrode mixture in which the carbon-coated positive electrode active material and the fibrous PTFE were uniformly dispersed. The obtained positive electrode mixture had a solids content of 100%. This positive electrode mixture was passed through a gap between two rollers, and rolled to produce a positive electrode mixture sheet. The ratio between the peripheral speeds of the two rollers was 1:1.5, and the thickness of the positive electrode mixture sheet was regulated within a range of greater than or equal to 100 µm and less than or equal to 120 µm. Then, the obtained positive electrode mixture sheet was passed through two rollers at room temperature to be compressed. The linear pressure applied in this compressing step was set to 1 t/cm.

### [Production of Positive Electrode (Bonding Step)]

The positive electrode mixture sheet was disposed on an aluminum foil as a core, and the resulting stack of the positive electrode mixture sheet and the core was pressed (linear pressure: 1 t/cm) by using two rollers at room temperature to obtain a positive electrode A1 composed of the core and the positive electrode mixture sheets bonded onto both surfaces of the core. The thickness of the positive electrode A1 was regulated within a range of greater than or equal to 170 µm and less than or equal to 180 µm. The density of the positive electrode active material in the positive electrode mixture sheet was regulated to 3.6 g/cc. When the positive electrode mixture sheet (positive electrode mixture layer) was divided into three equal parts in a thickness direction, the parts being defined as a first region, a second region, and a third region from a side of the core, the content of the fibrous PTFE in the first region, (a), the content of the fibrous PTFE in the second region, (b), and the content of the fibrous PTFE in the third region, (c), satisfied (c - a) × 100/(a + b + c) = 1%.

Of the positive electrode A1, the crystallite size of the fibrous PTFE and sheet formability were evaluated by the following methods. The ratio of the crystallite size of PTFE before and after the fibrillation (D2/D1) was calculated. Table 1 shows the evaluation results with the kneading conditions. The crystallite size of the fibrous PTFE, (D2), of the positive electrode A1 was 31.9 nm, and D2/D1 was 0.96 (reduction rate of the crystallite size: 4%).

### [Measurement of Crystallite Size]

### (Acid Dissolution)

The positive electrode mixture sheet peeled from the positive electrode was placed into a glass beaker. 30 mL of aqua regia (36% hydrochloric acid:70% nitric acid = 3:1 (volume ratio)) was added thereto, and the resultant was heated to dissolve the sheet. The solution was left to be cooled, diluted with pure water, and then sucking-filtered through a membrane filter (pore diameter: 0.1 µm). The residue on the filter was washed with pure water, and then heated and dried in a dryer at 50°C for 6 hours to obtain a sample (PTFE).
(X-Ray Diffractometry)
Diffractometer: SmartLab (manufactured by Rigaku Corporation)
Stage: Standard stage
Sample holder: Glass sample plate
X-ray for irradiation: Cu-Kα
Output: 40 kV - 30 mA
Optical system: CBO-α optical system (concentration method)
Scanning axis: 2θ/θ
Scanning rate: 1°/min (in narrow scanning)
Step: 0.01°
Scanning range: greater than or equal to 15° and less than or equal to 21° (range of PTFE peak)
Detector: SC detector
Slit conditions: 1/4° (DS), 1/4° (SS), 0.3 mm (RS)
From a half-value width of the peak obtained by the above determination, the crystallite size of PTFE was calculated by using the Scherrer equation.

### [Evaluation of Sheet Formability]

The positive electrode mixture sheet was visually observed and evaluated on the following criteria.

Excellent: The sheet surface is smooth, and the sheet has high tensile strength.

Good: The sheet surface is rather rough, but the sheet has high tensile strength.

Fair: The sheet surface is rough and the sheet has low tensile strength. However, it is possible to form a single sheet that can serve as a positive electrode mixture layer.

Poor: The sheet cannot be formed; or a single sheet is formed but the sheet cannot be retained to be fractured into pieces.

### <Example 2>

A positive electrode A2 was produced and subjected to the above evaluation in the same manner as in Example 1 except that, in the production of the positive electrode mixture, the treatment time using Wonder Crusher was changed to 5 minutes. The crystallite size of the fibrous PTFE, (D2), was 28.5 nm, and D2/D1 was 0.86.

### <Example 3>

A positive electrode A3 was produced and subjected to the above evaluation in the same manner as in Example 1 except that, in the production of the positive electrode mixture, the treatment time using Wonder Crusher was changed to 15 minutes. The crystallite size of the fibrous PTFE, (D2), was 28.0 nm, and D2/D1 was 0.85.

### <Example 4>

A positive electrode A4 was produced and subjected to the above evaluation in the same manner as in Example 1 except that, in the production of the positive electrode mixture, a kneader was used instead of Wonder Crusher, and that the raw materials for a mixture were treated for 5 minutes. The crystallite size of the fibrous PTFE, (D2), was 22.8 nm, and D2/D1 was 0.69.

### <Comparative Example 1>

A positive electrode B1 was produced and subjected to the above evaluation in the same manner as in Example 1 except that, in the production of the positive electrode mixture, a micro-speed mixer (manufactured by Takara Koki) was used instead of Wonder Crusher, and that the raw materials for a mixture were treated for 5 minutes. The crystallite size of the fibrous PTFE, (D2), was 32.5 nm, and D2/D1 was 0.98.

### <Comparative Example 2>

A positive electrode B2 was produced and subjected to the above evaluation in the same manner as in Example 1 except that, in the production of the positive electrode mixture, the treatment conditions using Wonder Crusher were changed to the number of rotation of Scale 1.5 for 3 minutes. The crystallite size of the fibrous PTFE, (D2), was 32.5 nm, and D2/D1 was 0.98.

### <Comparative Example 3>

A positive electrode B3 was produced and subjected to the above evaluation in the same manner as in Example 1 except that, in the production of the positive electrode mixture, the treatment time using a kneader was changed to 15 minutes. The crystallite size of the fibrous PTFE, (D2), was 13.1 nm, and D2/D1 was 0.40.

**[Table 1]**

| | Kneading conditions | Crystallite size D2 | D2/D1 | Sheet formability |
|---|---|---|---|---|
| Example 1 | WC Scale 3 × 1 min | 31.9nm | 0.96 | Good |
| Example 2 | WC Scale 3 × 5 min | 28.5nm | 0.86 | Excellent |
| Example 3 | WC Scale 3 × 15 min | 28.0nm | 0.85 | Good |
| Example 4 | Kneader 5 min | 22.8nm | 0.69 | Fair |
| Comparative Example 1 | MS mixer 5 min | 32.5nm | 0.98 | Poor |
| Comparative Example 2 | WC Scale 1.5 × 3 min | 32.5nm | 0.98 | Poor |
| Comparative Example 3 | Kneader 15 min | 13.1nm | 0.40 | Poor |

As shown in Table 1, according to the Examples, there can be provided the positive electrode having the dense positive electrode mixture sheet (positive electrode mixture layer) with high strength and good sheet formability compared with the Comparative Examples. The non-aqueous electrolyte secondary battery including the positive electrode of the Examples have excellent cycle characteristics, because the mixture layer hardly deteriorates due to charge and discharge, for example. The mixture sheet of good quality may be obtained only when the crystallite size of the fibrous binder included in the mixture sheet is greater than or equal to 20 nm and less than or equal to 32 nm, or when the reduction rate of the crystallite size due to fibrillation of the binder is greater than or equal to 4% and less than or equal to 40%, or when both the requirements are satisfied.

### REFERENCE SIGNS LIST

10 Electrode, 11 Core, 12 Mixture sheet, 20 Electrode mixture, 21 Active material, 22, 22x Binder, 30 Mixer, 31, 32 Roller

## Claims

1. An electrode, comprising:
a core; and
a mixture sheet bonded onto a surface of the core, wherein
the mixture sheet includes an active material and a fibrillated fibrous binder, and
the binder has a crystallite size of greater than or equal to 20 nm and less than or equal to 32 nm as determined by X-ray diffractometry.

2. The electrode according to claim 1, wherein a content of the binder in the mixture sheet is greater than or equal to 0.4 parts by mass and less than or equal to 5.0 parts by mass per 100 parts by mass of the active material.

3. The electrode according to claim 1 or 2, wherein when the mixture sheet is divided into three equal parts in a thickness direction, the parts being designated as a first region, a second region, and a third region from a core side, a content of the binder in the first region, (a), a content of the binder in the second region, (b), and a content of the binder in the third region, (c), satisfy (c - a)/(a + b + c) ≤ ±10%.

4. The electrode according to any one of claims 1 to 3, wherein the binder is polytetrafluoroethylene.

5. A non-aqueous electrolyte secondary battery, comprising the electrode according to any one of claims 1 to 4.

6. A method for manufacturing an electrode, including:
the first step of mixing an active material and a binder to produce an electrode mixture having a solids content of substantially 100%;
the second step of forming and rolling the electrode mixture into a sheet to produce a mixture sheet; and
the third step of bonding the mixture sheet onto a surface of a core,
wherein, in at least the first step, the binder is fibrillated so that a reduction rate of a crystallite size of the binder is greater than or equal to 4% and less than or equal to 40% as determined by X-ray diffractometry.

7. The method for manufacturing an electrode according to claim 6, wherein the binder is fibrillated so that the crystallite size is greater than or equal to 20 nm and less than or equal to 32 nm.

8. The method for manufacturing an electrode according to claim 6 or 7, wherein the binder supplied into the first step is polytetrafluoroethylene particles having an average particle diameter of greater than or equal to 100 µm and less than or equal to 500 µm.
